# EUROPEAN PATENT APPLICATION

(11) **EP 4 650 043 A1**
(43) Date of publication of application: **19.11.2025**
(21) Application number: 24020154.1
(22) Date of filing: 15.05.2024
(51) Int. Cl.: B01J 19/00, F28D 7/00, B01J 8/06, B01J 19/08

(54) **GAS TREATMENT SYSTEM AND METHOD FOR TREATING A GAS**

(71) Applicant: Selas-Linde GmbH, 82049 Pullach (DE)
(72) Inventor: Löwe, Lennard, 82049 Pullach (DE); Schipfer, Andreas, 82049 Pullach (DE); Lemme, Volkmar, 82049 Pullach (DE)
(74) Representative: Lu, Jing

(57) **Abstract**

A gas treatment system (100) for treating a gas as provided herein comprises a housing (1) enclosing heatable tubes (2) and electric heating means (3) configured to heat the heatable tubes (2) and a venting arrangement (110) configured to vent the housing (1) when a pressure of a gas in the housing (1) exceeds a threshold pressure, wherein the venting arrangement (110) comprising a liquid lock unit (4). A method for treating a gas is also provided herein.

## Description

### Field

The present disclosure relates to a gas treatment system and to a method for treating a gas in which such a system is used.

### Background

In a number of processes in the chemical industry, reactors are used in which one or more gaseous reactants are passed through reaction tubes where they are heated and catalytically or non-catalytically reacted. Other processes include heating, but not primarily reacting, gases or gas mixtures in similar systems, i.e., systems comprising a plurality of tubes through which gases or gas mixtures are passed to be heated.

Herein, the term "heatable tubes" is used to cover both configurations, and such tubes are also referred to as "coils" in the language customary in the field. The term "gas" is used for pure gases, such as hydrogen, or gas mixtures, such as reactant mixtures. Specific applications are discussed below. The term "gas treatment" is intended to cover treatments in which components of a gas mixture are made to react, but also a mere heating of a gas. The heatable tubes may, as further explained below, be heatable using electrical heating elements. In such cases, however, safety issues may arise and have to be overcome, if possible, within a manageable effort.

WO 2022/214622 A1 discloses a method for carrying out a chemical reaction using a reactor system in which reaction tubes arranged in a reactor chamber are heated during a reaction period to a high temperature level using radiation heat which is provided by means of one or more electric heating elements which are provided in the reactor vessel. One or more flammable components are passed through the reaction tubes during the reaction period, and in at least a part of the reactor chamber in which the heating elements are provided, an inertizing gaseous atmosphere is provided during the reaction period or a part thereof.

### Summary

Against this background, a gas treatment system and a method for treating a gas comprising the features of the independent claims are proposed herein. Embodiments are the subject matter of the dependent claims and the description that follows hereinbelow.

A gas treatment system for treating a gas as proposed herein comprises a housing enclosing a plurality of heatable tubes and electric heating means configured to heat the heatable tubes, and a venting arrangement configured to vent the housing when a pressure of a gas in the housing exceeds a threshold pressure, wherein the venting arrangement comprising a liquid lock unit, particularly a water lock unit.

The heatable tubes and heating means may be provided in any manner known in the art. The heatable tubes may particularly be so-called coils of any type used in steam cracking or synthesis gas heating, but also straight reaction tubes as used in reforming applications.

The heating means may be or comprise, in certain configurations, heating elements, e.g., heating elements configured to provide radiation heat, inductive heating elements, or resistance heating elements such as heating mats, bands or the like. In other configurations, the heating means may also be or include means for direct heating the heatable tubes, e.g., by passing a heating current through the walls of the heatable tubes or a catalyst therein.

The solution as proposed herein combines the advantages of a closed box system, i.e. increased efficiency due to eliminated heat losses via the vent, with a safe release of overpressure in case of a hazardous event (tube leakage or rupture leading to the necessary pressure increase of the furnace atmosphere gas) to a safe location.

In embodiments as proposed herein, the venting arrangement comprises an inlet line of which a first end is connected to the housing and of which a second end ends in the liquid lock unit, and an outlet line of which a first end is connected to the liquid lock unit and of which a second end ends at a gas release position.

This allows for a targeted release of the gas in the housing, wherein specific features of the inlet and outlet line may be selective optimized according to the requirements of the arrangement under consideration.

In certain embodiments as proposed herein, the liquid lock unit is configured to enclose a water volume and a gas filled headspace above the water volume, wherein a dome element is provided and the second end of the inlet line opens into an interior space of the dome element, and wherein an opening of the dome element is oriented downwards and is submerged in the water volume in the liquid lock unit.

This arrangement is particularly advantageous, as further explained with reference to a specific embodiment below, because it particularly offers a plurality of cooling possibilities for the gas passing through the liquid lock unit.

In certain embodiments as proposed herein, a cylindrical element is provided to coaxially surround the dome element such as to form an annular space between the dome element and the cylindrical element, and the annular space is closed at a lower end thereof and is configured to be supplied with water from a water feed line and to accumulate the water up to an upper edge of the cylindrical element.

In this embodiment, the dome element, to which the gas from the housing impinges, can be advantageously cooled.

In certain embodiments as proposed herein, the liquid lock unit is configured to cool the headspace using water withdrawn from the water volume.

This is particularly advantageous in connection with a system wherein with a continuous or discontinuous water circulation is provided by feeding and withdrawing controlled amounts of water to and from the liquid lock unit.

In certain embodiments as proposed herein, at least one of a section at the second end of the inlet line and a section at the first end of the outlet line is lined with a heat resistant lining, which can be the same or different.

This embodiment particularly improves longevity of the venting arrangement.

In certain embodiments as proposed herein, the liquid lock unit is configured to distribute a gas stream passing through the water volume.

This particularly allows for finely distribute the gas stream to bubble through the water volume and therefore be effectively cooled.

In certain embodiments as proposed herein, the liquid lock unit is configured to be supplied with water and to be drained from water on the basis of a control strategy or an overflow mechanism.

In this embodiment, at a startup operation the water volume may also be significantly reduced in order to provide a low backpressure temporarily allowing pressure compensation of the housing.

In certain embodiments as proposed herein, the liquid lock unit is provided as a syphon unit, and/or the second end of the inlet line is, or is connected to, a dip tube configured to end in a water volume within the liquid lock unit.

The gas treatment system may, in certain embodiments, be configured to perform the gas treatment in the form of a reaction of components of the gas. This may be a catalytic or non-catalytic reaction which may be selected from, but not limited to, a catalytic or non-catalytic cracking reaction, particularly using one or more hydrocarbons and steam as reactants, a reforming reaction including steam reforming, autothermal reforming or partial oxidation, or any other reaction in which reactants are passed in gaseous form through heatable tubes.

In other embodiments, the gas treatment system may also be configured for heating, but not reacting, gases or gas mixtures, e.g., including heating hydrogen for injection into a blast furnace, or synthesis gas for producing direct reduced iron (DRI). Generally, embodiments as disclosed herein are advantageous for heating combustible or explosive gases or gas mixtures, or gases or gas mixtures which may form combustible or explosive mixtures.

A method for performing a chemical reaction as proposed herein comprises providing a gas treatment system according to any one of the preceding claims, passing a gas through the reaction tubes, heating the heatable tubes using the heating means; and venting the reactor chamber when a pressure of a gas in the housing exceeds a threshold pressure.

As to further features and advantages of such a method, reference is made to the explanations above concerning the gas treatment system and its different embodiments which likewise apply for the proposed method.

Embodiments as proposed herein, and some background of the present disclosure, is further explained below with reference to the following examples and accompanying drawings, which illustrate embodiments of the present invention with reference to, and in comparison with, the prior art.

### Figures

- Figure 1: illustrates a reactor system according to a proposed embodiment; and
- Figure 2: illustrates a liquid lock unit according to a proposed embodiment.

### Embodiments

In the Figures, elements of identical, essentially identical, functionally comparable, or technically compatible function and/or purpose may be identified with identical reference numerals, and repeated explanations may be omitted for reasons of conciseness. Explanations herein relating to devices, apparatus, systems, systems, etc., according to certain embodiments disclosed herein likewise may apply to methods, processes, procedures, etc. according to corresponding embodiments.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention.

Various embodiments as disclosed herein may suitably comprise, consist of, or consist essentially of, appropriate and technically sensible combinations of the disclosed elements, components, features, parts, steps, means, etc., other than those specifically described herein. In addition, this disclosure may include other inventions not presently claimed, but which may be claimed in future, particularly when encompassed by the scope of the independent claims.

In reactors mentioned at the outset, heating serves in particular to overcome the activation energy required for the chemical reaction to take place and, in the case of endothermic reactions, to provide the necessary energy for the chemical reaction. The reaction can proceed endothermically overall or, after overcoming the activation energy, exothermically. The present disclosure relates in particular to strongly endothermic reactions as further discussed below.

Examples of such processes are steam cracking, various reforming processes, in particular steam reforming, dry reforming (carbon dioxide reforming), mixed reforming processes, and processes for the dehydrogenation of alkanes, as well as synthesis gas or hydrogen heating for iron ore reduction, and the embodiments described below are not limiting the present invention to specific gas treatments. Any reference to a "reaction", to a "reaction tube" and to a "reactor chamber" hereinbelow shall likewise apply to any other kind of gas treatment and to heatable tubes and housings as described before.

In steam cracking, the reaction tubes are passed through the reactor in the form of coils, which typically have at least one reverse bend in the reactor, whereas in steam reforming, tubes are typically used which are passed through the reactor without a reverse bend. Any kind of tube geometries may be used. Embodiments disclosed herein may be used in connection with so-called "millisecond" or single-pass reactors which are characterized by very low dwell times.

Further applications of embodiments proposed herein are reactors for performing a reverse water gas shift (RWGS) reaction of carbon dioxide and hydrogen to form carbon monoxide and water, a dehydrogenation of oxygenates such as a reaction of methanol to formaldehyde and hydrogen, cracking of ammonia to yield nitrogen and hydrogen, dehydrogenation of so-called liquid organic hydrogen carriers (LOHC) as known in the field concerned, and reforming of methanol and glycerol (as far as not already included by the term "reforming" used above).

Embodiments as disclosed herein are suitable for all such processes and embodiments of reaction tubes. Purely by way of illustration, reference is made to expert literature such as the articles "Ethylene", "Gas Production" and "Propene" in Ullmann's Encyclopedia of Industrial Chemistry in its current versions.

The reaction tubes of the reactors mentioned are conventionally heated by using burners and a fuel such as natural gas. The reaction tubes are, for this purpose, guided through a combustion chamber in which the burners are also arranged at appropriate locations known in the field.

Currently, however, demand is increasing for synthesis products such as olefins, but also for synthesis gas and hydrogen, which are produced with no or reduced local carbon dioxide emissions. This demand cannot be met by processes using fired reactors due to the use of typically fossil fuels. Other processes are practically excluded due to high costs or for other reasons.

It has therefore been proposed to support or replace the burners in the reactors by electrical heating means. In addition to direct electrical heating, in which current is applied to the reaction tubes themselves, for example in a known star (point) circuit, and other types of heating, which are not explained in detail here, concepts also exist in particular for so-called indirect electrical heating. This is also used in the context of the present disclosure. Irrespective of the specific type of heating and the heating concept implemented in the process, heated reactors, whether heated by burners and/or electricity, are also referred to as "furnaces" herein.

Indirect electrical heating can be carried out, as explained e.g. in WO 2020/002326 A1, using electrically operated radiative heaters suitable for obtaining the high temperatures required for the reactions mentioned, such heaters being arranged within the furnace in such a way that they are not in direct contact with the reaction tubes. The heat transfer from the heaters to the reaction tubes takes place predominantly or exclusively in the form of radiant heat, without direct contact.

Reactor systems using electrical heaters may be designed as closed boxes or as enclosures comprising an open vent or stack to atmosphere. Either configuration may cause issues relating to safety or operability. A closed box solution may be considered intrinsically unsafe in case pressurized fluids are passed through the reaction tubes when electrical heating is used. In the hazard scenario of a tube leakage, a potentially explosive atmosphere will accumulate within the closed box and either cause it to burst or create an explosion when no safe release option is provided. In contrast, in fired reactor systems, leaking gas is removed with the flue gas stream to the stack outlet, i.e. at a safe location. In the case of an open connection to the atmosphere for electric furnaces, an air flow will be induced by the stack draft effect with air entering through leakages along the heater shell. This measure increases safety but creates an additional heat loss and reduces efficiency. The same problems arise in gas treatment systems which are configured to heat, but not react, gases or gas mixtures.

Embodiments as proposed herein solve these problems by providing a venting arrangement including a liquid lock unit, wherein the venting arrangement connects one or more reactor chambers to a safe location. For normal operation, the water level of the liquid lock unit will ensure that hot gases from the reactor chamber(s) (connected to an inlet of the liquid lock unit) cannot pass. In case of an overpressure in the reactor chamber(s), the arrangement system allows the hot gases to pass to an outlet of the liquid lock unit and from there to a safe location. While bubbling through the water of the liquid lock unit, an additional benefit will be the cooling of the hot gases. The design of the liquid lock unit ensures that most parts are water cooled or internally refractory lined and therefore do not require expensive materials. Particularly, a dome-shaped structure of the liquid lock unit at the end of an inlet line is externally water cooled, particularly via a connection of the water inlet to a water supply.

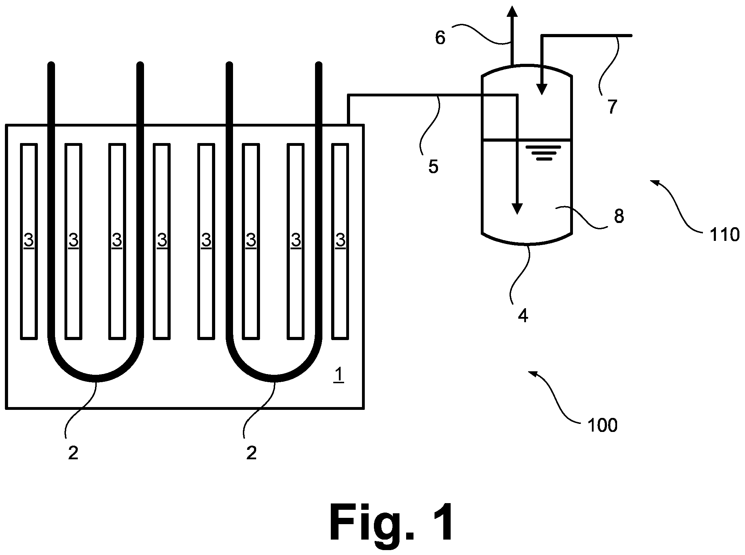

In Figure 1, a gas treatment system 100 is illustrated in a highly simplified manner. Gas treatment system 100 includes heatable tubes 2 which are arranged in a housing 1 and radiation heating elements as an example of heating means 3 of a type described elsewhere. Only two heatable tubes 2 are shown in Figure 1 but in embodiments as proposed herein any number of heatable tubes 2 can be provided. Likewise, eight radiation heating elements as heating means 3 are shown in Figure 1 to be arranged on the walls of the housing 1 and between the heatable tubes 2, but any number of radiation heating elements as heating means 3 can be used and these can be arranged as adequate. As described extensively in the literature, a preheated gas mixture may be passed through the heatable tubes 2 and may be reacted under the influence of radiation heat from the heating elements provided as the heating means 3. Upstream and downstream units are not shown for reasons of simplicity and generality.

A venting arrangement 110 is part of the system 100. Venting arrangement 110 includes a liquid lock unit 4 which is connected via an inlet line 5 to the housing 1 and an outlet 6 of which is arranged to pass gas from liquid lock unit 4 to a safe place. A water feed line 7 is arranged to replenish a water volume 8 in liquid lock unit 4 in case needed. Inlet line 5 ends below a surface of water volume 8. At any suitable position, one or more water removal lines, e.g., in the form draining or overflow lines may be included, which are not illustrated for reasons of clarity.

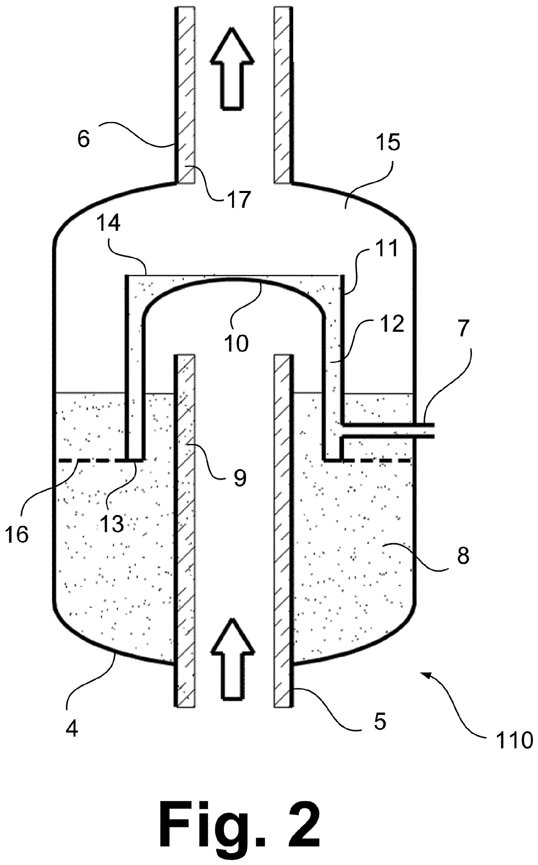

In Figure 2, a venting arrangement according to a specific embodiment as disclosed herein is schematically illustrated and, as above, referred to by 110. Elements already discussed in connection with Figure 1 are indicated by like reference numerals.

As illustrated in Figure 2, at least a terminal end of inlet line 5 is lined with a heat resistant lining 9 and opens upwards into an interior space of a dome element 10. An opening of the dome element 10 is oriented downwards and is submerged into the water volume 8. A cylindrical element 11 is arranged coaxially with dome element 10. An annular space 12 between cylindrical element 11 and dome element 10 is closed at a lower end 13 towards water volume 8 and opens at an upper end 14 to a headspace 15 of liquid lock unit 4. Water feed line 7 opens towards annular space 12 and water may be fed via water feed line 7 into the annular space 12, and such water may overflow an upper edge of cylindrical element 11 and pass a perforated plate 16 to form water volume 8 in the liquid lock unit 4. A terminal end of water feed line 7 may be submerged within water volume 8 in order to provide cooling thereof.

If an overpressure in inlet line 5 becomes high enough, gas in inlet line 5 may displace water of the water volume 8 inside the dome element 10 and this gas may enter headspace 15 from which it may pass through outlet 6 to the safe location. Depending on a temperature of the gas, it may be required or advantageous to provide at least an initial portion of outlet 6 and/or headspace 15 walls with a heat resistant lining 17 as well. Perforated plate 16 may particularly be provided to improve a gas distribution and improve cooling.

## Claims

1. A gas treatment system (100) for treating a gas, comprising:
a housing (1) enclosing heatable tubes (2) and electric heating means (3) configured to heat a gas flowing in the heatable tubes (2); and
a venting arrangement (110) configured to vent the housing (1) when a pressure of a gas in the housing (1) exceeds a threshold pressure;
wherein the venting arrangement (110) comprises a liquid lock unit (4).

2. The system (100) according to claim 1,
wherein the heating means (3) are provided as, or include, at least one of heating elements configured to provide radiation heat, inductive heating elements, resistance heating elements, and means for direct heating the heatable tubes (8).

3. The system (100) according to claim 1 or 2,
wherein the venting arrangement (110) comprises:
an inlet line (5) of which a first end is connected to the housing (1) and of which a second end ends in the liquid lock unit (4); and
an outlet line (6) of which a first end is connected to the liquid lock unit (4) and of which a second end ends at a gas release position.

4. The system (100) according to claim 3,
wherein the liquid lock unit (4) is configured to enclose a water volume (8) and a gas filled headspace (15) above the water volume (8);
wherein a dome element (10) is provided and the second end of the inlet line (5) opens into an interior space of the dome element (10), and
wherein an opening of the dome element (10) is oriented downwards and is submerged in the water volume (8) in the liquid lock unit (4).

5. The system (100) according to claim 4,
wherein a cylindrical element (11) is provided to coaxially surround the dome element (10) such as to form an an annular space (12) between the dome element (10)
and the cylindrical element (11), and
wherein the annular space (12) is closed at a lower end (13) thereof and is configured to be supplied with water from a water feed line (7) and to accumulate the water up to an upper edge of the cylindrical element.

6. The system according to claim 4 or 5,
wherein the liquid lock unit (4) is configured to cool the headspace (15) using water withdrawn from the water volume (8) or flowing to the water volume.

7. The system (100) according to any one of claims 3 to 6,
wherein at least one of a section at the second end of the inlet line (5) and a section at the first end of the outlet line (6) and/or a section of the walls of the headspace is lined with a heat resistant lining (9, 17).

8. The system (100) according to any one of claims 3 to 7,
wherein the liquid lock unit (4) is configured to distribute a gas stream passing through the water volume (8).

9. The system (100) according to any one of the preceeding claims,
wherein the liquid lock unit (4) is configured to be supplied with water and to be drained from water on the basis of a control strategy or an overflow mechanism.

10. The system (100) according to any one of the preceding claims,
wherein the liquid lock unit (4) is provided as, or includes, a syphon unit.

11. The system (100) according to any one of the preceding claims,
wherein the second end of the inlet line (5) is, or is connected to, a dip tube configured to end in a water volume (8) within the liquid lock unit (4).

12. The system (100) according to any one of the preceding claims,
wherein the system (100) is configured to perform the gas treatment in the form of a reaction of components of the gas.

13. The system (100) according to any one of the preceding claims,
wherein the system (100) is configured to perform the gas treatment in the form of heating, but not reacting, the gas.

14. A method for treating a gas, comprising:
providing a system (100) according to any one of the preceding claims;
passing a gas through the heatable tubes (2);
heating the heatable tubes (2) using the electric heating means (3); and
venting the housing (1) gas atmosphere when a pressure of a gas in the housing (1) exceeds a threshold pressure.
